# FASCICULE DE BREVET EUROPEEN

(11) **EP 2 505 327 B1**
(45) Date de publication et mention de la délivrance du brevet: **19.06.2013**
(21) Numéro de dépôt: 11160278.5
(22) Date de dépôt: 29.03.2011
(51) Int. Cl.: B29C 33/04, B29C 33/38, B29C 70/42, B29C 70/86

(54) **Procédé de fabrication d'un outillage de moulage destiné au moulage d'une pièce en matériau composite**
Herstellungsverfahren eines Formgusswerkzeugs, das für den Formguss eines Verbundwerkstücks bestimmt ist
Method for manufacturing a moulding tool intended for moulding a part made of a composite material

(43) Date de publication de la demande: 03.10.2012
(73) Titulaire: Techni-Modul Engineering, 63114 Coudes (FR)
(72) Inventeur: Luquain, Serge, 63340 Saint Germain Lembron (FR)
(74) Mandataire: Maureau, Philippe

(56) Documents cités:
- WO-A1-96/14196
- WO-A1-2011/029276
- DE-A1- 3 301 337
- JP-A- 5 200 756
- US-A- 5 031 483
- US-A- 5 876 550

## Description

L'invention concerne le domaine de l'outillage de moulage, et plus particulièrement de moulage de pièces en matériau composite de grandes dimensions, utilisées notamment dans le domaine de l'aéronautique ou de l'automobile.

Les documents WO 96/14196 A1 et WO 2011/029276 A1 représentent l'état de la technique dans le domaine des outillages de moulage.

Dans certains secteurs d'activités, tels que celui de l'aéronautique ou de l'automobile, de nombreuses pièces, souvent de grandes dimensions, sont réalisées en matériaux composites. L'optimisation et le paramétrage de la forme de ces pièces ont fait l'objet d'études très poussées. C'est pourquoi, lors de la réalisation en série de ces pièces, et plus précisément lors de leur moulage, il est essentiel de disposer d'un outillage de moulage de qualité et de haute précision permettant d'obtenir une pièce moulée, dont la forme se conforme parfaitement aux paramètres déterminés lors de sa mise au point et ne présentant aucun défaut.

Par matériau composite, on entendra dans le cadre de la présente invention, un matériau constitué :
- d'une ossature (ou autrement dit d'un renfort) réalisée à partir de fibres, qui assure la tenue mécanique du matériau composite et
- d'une matrice, en l'occurrence une résine thermodurcissable ou bien une résine thermoplastique, qui assure la cohésion du matériau composite.

Lorsque la résine est une résine thermodurcissable, l'outillage de moulage doit être soumis à un cycle thermique parfaitement établi en fonction du procédé de moulage choisi et de la nature de la résine, de manière à obtenir le durcissement adéquat de la résine, de par sa polymérisation, au sein du réseau de fibres. Le cycle thermique comprend généralement les étapes suivantes :
1) une 1^{ière} montée en température depuis la température ambiante jusqu'à une température d'un 1^{ier} palier de maintien (à environ 100°C) ;
2) le maintien de la température à ce 1^{ier} palier de température pendant une durée déterminée ;
3) une 2^{ième} montée en température depuis la température du 1^{ier} palier de maintien jusqu'à une température d'un 2^{ième} palier de maintien (à environ 180°C) ;
4) le maintien de la température à ce 2^{ième} palier de température pendant une durée déterminée. Au cours de cette étape s'effectue le durcissement de la résine thermodurcissable (ou autrement dit sa polymérisation ou sa réticulation) ;
5) une descente en température depuis la température du 2^{ième} palier de maintien jusqu'à la température de démoulage (d'environ 60°C).

En fonction du procédé de moulage choisi, le nombre de paliers de maintien de température peut varier de 1 à 10.

Lorsque la résine est une résine thermoplastique, l'outillage de moulage doit être aussi soumis à un cycle thermique parfaitement établi en fonction du procédé de moulage choisi et de la nature de la résine, de manière à obtenir le durcissement adéquat de la résine au sein du réseau de fibres. Dans cas, le cycle thermique peut comprendre une seule étape de montée en température et une seule étape de refroidissement. Il n'y a pas nécessité de maintien de température tel que cela a été décrit ci-dessus dans le cas d'une résine thermodurcissable.

Pendant la phase de refroidissement du cycle thermique, si l'outillage de moulage est réalisé en acier ou en aluminium, il exerce des contraintes mécaniques sur la pièce en matériau composite tout juste moulée. En effet, le coefficient de dilatation thermique d'un matériau composite est de l'ordre de 2,5.10⁻⁶ K⁻¹ soit inférieur à celui de l'acier (12.10⁻⁶ K⁻¹) ou de l'aluminium (24.10⁻⁶ K⁻¹) dont est habituellement constitué l'outillage de moulage. C'est pourquoi, lors du refroidissement, la pièce moulée en matériau composite se trouve « prise en étau » par l'outillage de moulage, du fait de la rétractation plus importante de l'outillage de moulage que celle de la pièce moulée en matériau composite. Cela peut dégrader considérablement la pièce moulée en entraînant l'apparition de fêlures, voire la briser, et ce tout particulièrement si celle-ci est de grandes dimensions. Par exemple, sur un outillage de moulage en acier d'une longueur de 4m, une rétractation de l'ordre de 7 mm peut se produire.

Afin de s'affranchir de ce problème causé par la différence de rétractation entre l'outillage de moulage et la pièce moulée lors du refroidissement, il est possible d'envisager de démouler à chaud la pièce tout juste moulée, soit généralement à une température de l'ordre de 180°C. Cependant, cette solution se heurte à des problèmes de sécurité.

Il est aussi possible d'envisager d'utiliser un outillage de moulage en un acier commercialisé sous la dénomination commerciale INVAR ®. En effet, l'INVAR® est un acier à coefficient de dilatation thermique de 1,2.10⁻⁶ K⁻¹ qui, par conséquent, n'induit pas de contraintes mécaniques dans la pièce en matériau composite lors de l'étape de refroidissement. Cependant, cet alliage est très coûteux, de l'ordre de dix fois le coût d'un acier dont est habituellement constitué un outillage de moulage.

Il a été aussi envisagé de disposer d'un outillage de moulage réalisé lui aussi en un matériau composite. De cette façon, l'outillage de moulage et la pièce moulée étant constitués d'un même matériau, il ne se pose plus le problème causé par la différence de rétractation entre l'outillage de moulage et la pièce moulée lors du refroidissement.

En outre, la gestion des étapes du cycle thermique décrit ci-dessus est réalisée grâce à un fluide caloporteur circulant à l'intérieur de l'outillage de moulage.

Il est essentiel que la circulation du fluide caloporteur soit conçue et dimensionnée de façon à respecter les vitesses de montée et de descente en température, ainsi que les homogénéités thermiques des paliers de maintien de température.

Pour cela, il faut que :
- la surface d'échange entre le fluide caloporteur et l'outillage de moulage soit suffisante pour fournir la puissance nécessaire au respect des vitesses de montée et de descente en température du cycle thermique.
- le positionnement du circuit de fluide caloporteur au sein de l'outillage de moulage soit défini précisément, afin de respecter les homogénéités thermiques aux paliers de maintien en température. De manière avantageuse, la distance entre le circuit de fluide caloporteur et la surface moulante de l'outillage de moulage doit être constante.

Afin de permettre la réalisation d'un circuit du fluide caloporteur à l'intérieur de l'outillage de moulage se conformant aux exigences précitées, plusieurs solutions, telles que le forage, l'intégration de tuyaux ou encore le rainurage ont été mises en oeuvre lors de la fabrication d'un outillage de moulage.

Cependant, ces différentes solutions présentent des inconvénients.

La solution de l'intégration de tuyaux consiste à intégrer des tuyaux à l'étape de réalisation du bloc matière par fonderie ou par soudure. Elle est limitée à des outillages de moulage réalisés en fonderie ou à des outillages de moulage de forme peu complexe (intégration par soudure). De plus, cette technique génère une interface thermique supplémentaire (tuyau) entre le fluide caloporteur et la surface moulante de l'outillage de moulage. Cela a pour conséquence de dégrader les performances thermiques (vitesse et homogénéité) de l'outillage de moulage.

La solution de forage qui consiste à forer des passages cylindriques dans l'outillage de moulage n'est pas adaptée à des formes de coquille complexes dont peut être constitué l'outillage de moulage. En effet, les forages étant droits, il est difficile de réaliser un passage à une distance constante de la surface moulante de l'outillage de moulage en tous points. De plus, cette technique est limitée en dimensions. La longueur droite maximale réalisable par forage est de l'ordre de 12 mètres.

La solution du rainurage et de l'assemblage consiste à réaliser des rainures dans l'outillage de moulage pour créer le passage de fluide caloporteur. Une plaque est ensuite rapportée et vissée afin de fermer le circuit de fluide de caloporteur. Un joint torique est implanté à l'extérieur de ce rainurage entre la coquille de l'outillage de moulage et la plaque de manière à assurer l'étanchéité du circuit du fluide caloporteur. Cette technique est aussi limitée à des outillages de moulage de forme peu complexe. De plus, elle est réalisée par usinage et demeure coûteuse. Enfin, en fonction de la durée de vie de l'outillage de moulage, cette solution pourra nécessiter de la maintenance (par exemple le remplacement du joint torique).

En outre, le matériau composite, en particulier lorsqu'il est principalement constitué de fibres de carbone et de résine époxyde, est un matériau difficile à usiner. Il nécessite l'utilisation d'outils coupants spécifiques et onéreux. Par ailleurs, les poussières générées pendant l'usinage d'un tel matériau composite sont dangereuses pour l'opérateur et nécessite de prendre des précautions contraignantes.

On comprend aisément de cette description de l'état de l'art en matière d'outillage de moulage que la conception et la mise au point d'un outillage de moulage destiné au moulage d'une pièce en matériau composite se révèlent particulièrement complexes. En particulier, les procédés connus de fabrication d'outillage de moulage ne sont pas bien adaptés pour la réalisation d'un circuit de fluide caloporteur qui puisse parcourir de manière optimale pour les échanges thermiques toute la surface moulante de l'outillage de moulage.

La présente invention remédie à l'ensemble de ces inconvénients en proposant un procédé de fabrication d'un outillage de moulage qui est parfaitement approprié au moulage de toute pièce en matériau composite.

Le procédé de fabrication d'un outillage de moulage destiné au moulage d'une pièce en matériau composite selon l'invention se caractérise en ce qu'il comprend les étapes suivantes :
a) On dispose d'un support.
b) On dispose un premier empilement de tissus composites sur le support, lesdits tissus composites consistant en des fibres ayant été préimprégnées ou poudrées d'une résine thermodurcissable ou d'une résine thermoplastique.
c) On dispose sur le premier empilement de tissus composites un noyau en un matériau dispersible dans un liquide, ledit noyau ayant la forme d'un circuit de fluide caloporteur adapté à l'outillage de moulage.
d) On dispose un deuxième empilement de tissus composites sur le premier empilement de tissus composites en comblant l'espace laissé libre par le noyau de manière à ce que l'épaisseur du deuxième empilement de tissus composites soit essentiellement égale à celle du noyau.
e) On dispose un troisième empilement de tissus composites sur le deuxième empilement de tissus composites.
f) On comprime l'ensemble des empilements de tissus composites obtenu à l'issue de l'étape e).
g) On effectue un cycle thermique, ledit cycle thermique étant conçu de manière à durcir la résine thermodurcissable ou la résine thermoplastique pour obtenir une forme moulée et ledit matériau dispersible dans un liquide demeurant stable à la température maximale atteinte au cours dudit cycle thermique.
h) On démoule la forme moulée obtenue à l'issue de l'étape g).
i) On réalise la dissolution du noyau au moyen du liquide dans lequel le matériau est dispersible en vue de l'élimination de celui-ci.
j) On obtient un outillage de moulage en un matériau composite.

L'outillage de moulage obtenu selon le procédé de fabrication ne posera pas de problème causé par la différence de rétractation entre l'outillage de moulage et la pièce moulée en un matériau composite lors du refroidissement, puisqu'il est lui-même réalisé en un matériau composite.

Par tissu composite, on entend tout tissu préimprégné ou poudré ainsi qu'une nappe de matériau composite.

Les tissus composites peuvent comprendre des fibres de renfort choisies dans le groupe constitué par les fibres de carbone, les fibres de verre et les fibres d'aramide.

Selon une variante avantageuse de l'invention, les tissus composites consistent en des fibres qui ont été préimprégnées ou poudrées d'une résine thermodurcissable.

La résine thermodurcissable peut être choisie dans le groupe constitué par les résines polyesters insaturés, les résines époxyde, les résines vinylester, les résines phénoliques, les résines polyimides, les résines polystyrylpyridine.

Selon une autre variante avantageuse de l'invention, les tissus composites consistent en des fibres qui ont été préimprégnées ou poudrées d'une résine thermoplastique.

La résine thermoplastique peut être choisie dans le groupe constitué par les polyéther éther cétone, les polyamides, les polyétherimides, les polyéthylènes, les polypropènes, les poly(sulfure de phénylène).

De préférence, le liquide dans lequel le matériau est dispersible est de l'eau.

De manière préférée, ce matériau est obtenu à partir d'un mélange contenant :
- au moins une charge telle que du sable, du quartz,
- au moins un liant soluble dans l'eau, de préférence choisi parmi les liants organiques, tels que les polysaccharides, et tout particulièrement les amidons et dérivés d'amidon.
- de l'eau.

Le matériau peut en outre contenir des particules de verre et/ou de la poudre d'un métal, tel que l'aluminium, le cuivre, ou une poudre de bronze ou bien encore d'autres liants, tels que des alcools polyvinyliques.

La mise en forme du noyau peut être réalisée par tout procédé à la portée de l'homme du métier. Le noyau ainsi obtenu est sous une forme compacte et est quasiment sec.

Selon un mode de réalisation du procédé de fabrication de l'outillage de moulage, on réalise le noyau en un matériau dispersible dans un liquide par moulage en une seule pièce.

Selon un autre mode de réalisation du procédé de fabrication de l'outillage de moulage, on réalise le noyau en un matériau dispersible dans un liquide à partir de plusieurs tronçons qui sont raccordés les uns aux autres.

Ce mode de réalisation permet une réalisation aisée du noyau, et ce par l'emploi de moules standard destinés au moulage des tronçons. Une forme complexe et de grande dimension du noyau peut être techniquement aisément obtenue selon ce mode de réalisation.

Au cours de l'étape i) du procédé de fabrication d'un outillage de moulage, on peut réaliser la dissolution du noyau par projection du liquide ou par immersion dans le liquide dans lequel est dispersible le matériau.

Le procédé de fabrication d'un outillage de moulage selon l'invention propose ainsi une réalisation du circuit du fluide caloporteur au sein de l'outillage de moulage ne nécessitant pas de moyens techniques complexes, ni dangereux d'un point de vue de la sécurité, et de surcroît tout en garantissant un circuit de fluide caloporteur assurant parfaitement sa fonction de transport de chaleur de manière homogène au sein de l'ensemble de l'outillage de moulage. La pièce moulée grâce à l'outillage de moulage obtenu selon le procédé de fabrication tel que décrit ci-dessus est moulée dans des conditions tout à fait adéquates de moulage, puisque l'outillage de moulage est parcouru de manière optimale par le circuit de fluide de caloporteur, et ainsi toutes les parties la pièce en matériau composite ont bénéficié des mêmes échanges thermiques.

Au cours de l'étape f) du procédé de fabrication de l'outillage de moulage, on comprime l'ensemble des empilements de tissus composites obtenu à l'issue de l'étape e). Pour ce faire, il est possible de disposer une bâche sur le troisième empilement de tissus composites de manière étanche, par exemple au moyen d'un mastic. Ensuite, on tire le vide de manière à instaurer une dépression de l'ordre de 1 bar et donc à comprimer l'ensemble des empilements de tissus composites. Pour renforcer l'effort de compression, cette étape de compression peut être réalisée dans un autoclave. Il est aussi possible de réaliser la compression de l'étape f) par pressage au moyen d'un deuxième support que l'on dispose sur le troisième empilement de tissus composites.

Selon un mode de réalisation préféré, la surface du premier empilement de tissus composites en contact avec le support au cours du procédé de fabrication constitue la surface moulante de l'outillage de moulage. Dans ce mode de réalisation, il doit avoir été tenu compte lors de la conception du support de la différence de rétractation entre le support et l'outillage de moulage lors du refroidissement pour mouler une surface moulante de l'outillage de moulage de la forme souhaitée pour le moulage d'une pièce en matériau composite. Ce mode de réalisation est préféré car il ne nécessite pas d'usinage de la surface moulante de l'outillage de moulage.

Selon un autre mode de réalisation, la surface moulante de l'outillage de moulage est constituée par la surface du troisième empilement de tissus composites opposée à la surface du troisième empilement de tissus composites en contact avec le deuxième empilement de tissus composites. Dans ce mode de réalisation, il est alors nécessaire d'effectuer des finitions de manière à obtenir la surface moulante souhaitée pour le moulage d'une pièce en matériau composite. Selon ce mode de réalisation de l'invention, le procédé de fabrication d'un outillage de moulage comprend alors une étape supplémentaire d'usinage de la surface moulante de l'outillage de moulage.

L'invention concerne aussi un outillage de moulage destiné au moulage d'une pièce en matériau composite susceptible d'être obtenu selon le procédé de fabrication d'un outillage de moulage tel que décrit ci-dessus.

De manière préférée, la pièce en matériau composite est une pièce destinée au domaine technique de l'automobile ou de l'aéronautique.

Le procédé de fabrication selon l'invention concilie ainsi une mise en oeuvre technique aisée avec des coûts économiques réduits, tout en ne se heurtant pas à des problèmes de sécurité.

L'invention sera mieux comprise à l'aide de la description détaillée qui est exposée ci-dessous en référence au dessin annexé représentant, à titre d'exemple non limitatif, une forme de réalisation des différents éléments constitutifs de l'outillage de moulage et du noyau.
La figure 1 est une vue en perspective éclatée des différents éléments constitutifs de l'outillage de moulage et du noyau.

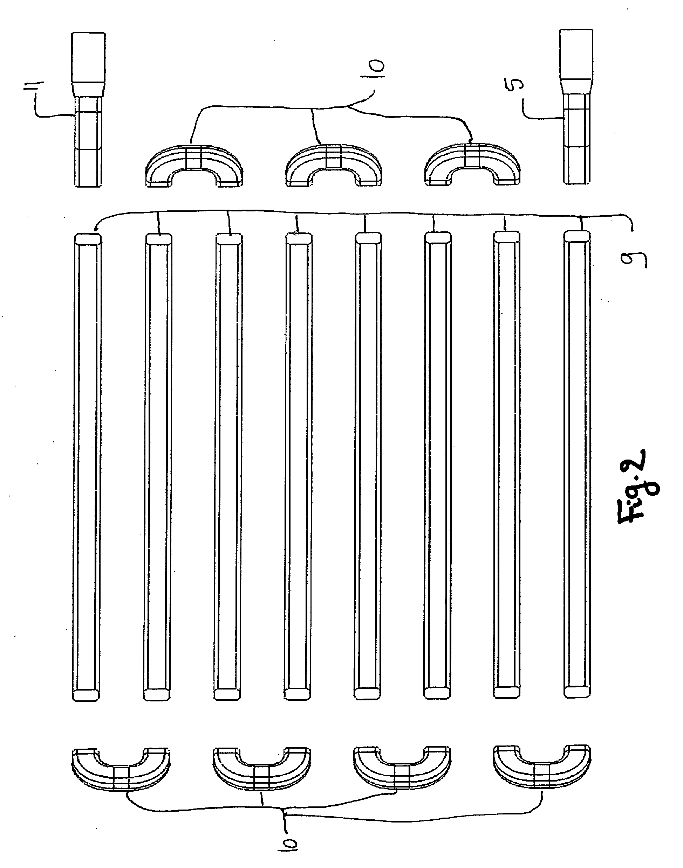

La figure 2 est une vue de face du noyau désassemblé.

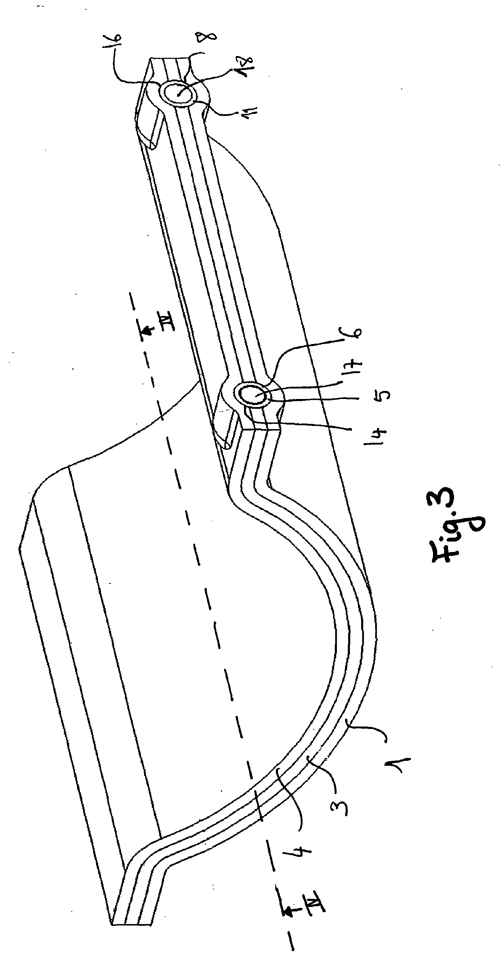

La figure 3 est une vue en perspective des différents éléments constitutifs de l'outillage de moulage et du noyau.

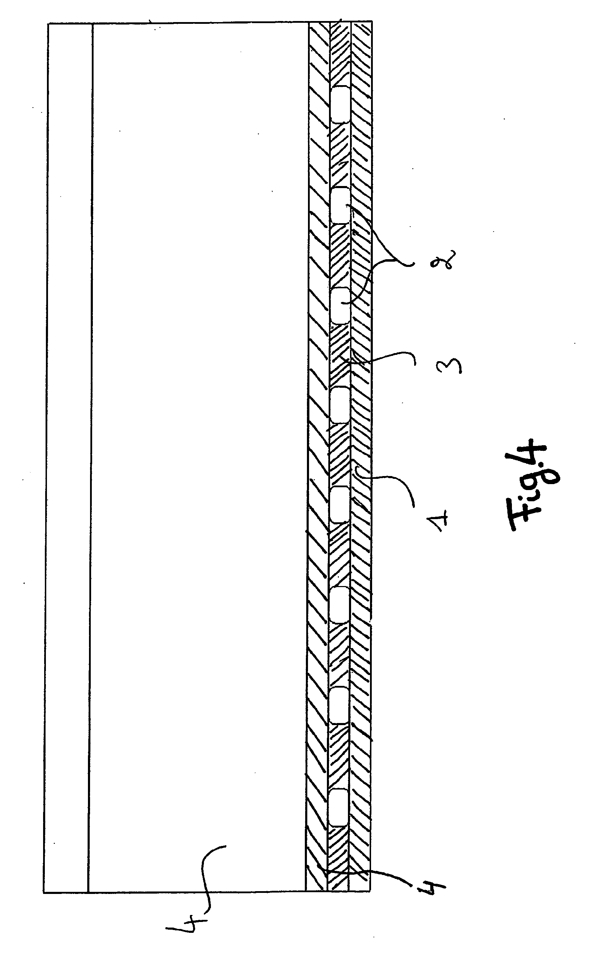

La figure 4 est une vue en coupe des différents éléments constitutifs de l'outillage de moulage et du noyau suivant la ligne IV-IV de la figure 3.

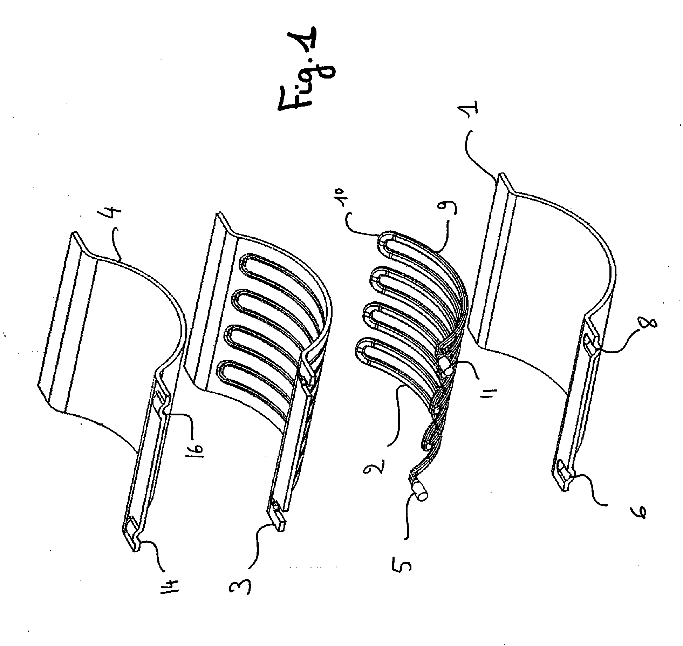

Sur la figure 1 sont représentés :
- un premier empilement de tissus composites 1 ;
- un deuxième empilement de tissus composites 3 ;
- un troisième empilement de tissus composites 4.

Les tissus composites de ces empilements de tissus composites 1, 3, 4 ont été obtenus à partir d'un tissage de fibres de carbone imprégnées d'une résine époxyde.

Le premier empilement de tissus de composites 1, le deuxième empilement de tissus de composites 3 et le troisième empilement de tissus composites 4 ont une forme incurvée selon la courbure de la surface de moulage de l'outillage de moulage souhaitée.

Le noyau 2 a été réalisé en un matériau dispersible dans de l'eau.

Le noyau 2 se décompose en :
- 8 tronçons 9 identiques. Les tronçons 9 sont incurvés selon une courbure essentiellement similaire à la courbure de la surface moulante souhaitée de l'outillage de moulage.
- 7 tronçons 10 identiques destinés à raccorder entre eux les tronçons 9,
- un tronçon 17 qui est moulé à l'intérieur d'un embout d'entrée 5 et qui est destiné à être raccordé à un tronçon 9,
- un tronçon 18 qui est moulé à l'intérieur d'un embout de sortie 11 et qui est destiné à être raccordé à un tronçon 9.

Des moules de forme standard ont été utilisés pour mouler les tronçons 9 et les raccords 10. Les tronçons 9, les raccords 10, le tronçon 17 et le tronçon 18 sont assemblés par collage au moyen d'un liant adapté au matériau dispersible dans l'eau dont est constitué le noyau 2 de manière à constituer le parcours du circuit du fluide caloporteur de la forme souhaitée.

Comme représenté sur la figure 1, le deuxième empilement de tissus composites 3 a été découpé de manière à dégager un espace libre pour le passage du noyau 2 lors de la disposition du deuxième empilement de tissus composites 3 sur le premier empilement de tissus composites 1. De plus, l'épaisseur du deuxième empilement de tissus composites 3 est telle qu'une fois disposé sur le premier empilement de tissus composites 1, le noyau 2 et le deuxième empilement de tissus composites 3 définissent une surface substantiellement plane.

Sur le premier empilement de tissus composites 1 ont été ménagés un évidement 6 destiné à loger l'embout d'entrée 5 et un évidement 8 destiné à loger l'embout de sortie 11.

L'embout d'entrée 5 et l'embout de sortie 11 sont réalisés en métal.

Sur le troisième empilement de tissus composites 4 ont été ménagés un évidement 14 destiné à loger l'embout d'entrée 5 et un évidement 16 destiné à loger l'embout de sortie 11.

Au cours de l'étape g) du procède de fabrication de l'outillage de moulage, la résine époxyde de chacun des premier empilement de tissus composites 1, deuxième empilement de tissus composites 3, troisième empilement de tissus composites 4 se disperse dans l'ensemble de ces empilements de tissus composites 1, 3, 4. Ainsi la distinction de chacun de ces empilements de tissus composites 1, 3, 4 n'est plus visible.

Aussi, lors de l'étape g) du procédé de fabrication d'un outillage de moulage, la résine époxyde colle l'embout d'entrée 5 et l'embout de sortie 11 sur le premier empilement de tissus composites 1, le deuxième empilement de tissus composites 3 et le troisième empilement de tissus composites 4.

A l'étape i) du procédé de fabrication d'un l'outillage de moulage, on réalise la dissolution du noyau 2 au moyen d'un jet d'eau sous pression en reliant l'embout d'entrée 5 à une source d'eau (non représentée) et en reliant l'embout de sortie 11 à un moyen de récyclage de l'eau et du matériau dispersible dans l'eau (non représenté).

On obtient ainsi un outillage de moulage en un matériau composite de fibres de carbone et de résine époxyde qui comporte un circuit destiné au transport d'un fluide caloporteur. L'embout d'entrée 5 est relié à une source de fluide caloporteur (non représentée) et l'embout de sortie 11 est relié à un moyen de récupération du fluide caloporteur (non représenté).

## Revendications

1. Procédé de fabrication d'un outillage de moulage destiné au moulage d'une pièce en matériau composite qui se **caractérise en ce qu'**il comprend les étapes suivantes :
a) On dispose d'un support.
b) On dispose un premier empilement de tissus composites (1) sur le support, lesdits tissus composites consistant en des fibres ayant été préimprégnées ou poudrées d'une résine thermodurcissable ou d'une résine thermoplastique.
c) On dispose sur le premier empilement de tissus composites (1) un noyau (2) en un matériau dispersible dans un liquide, ledit noyau (2) ayant la forme d'un circuit de fluide caloporteur adapté à l'outillage de moulage.
d) On dispose un deuxième empilement de tissus composites (3) sur le premier empilement de tissus composites (1) en comblant l'espace laissé libre par le noyau (2) de manière à ce que l'épaisseur dudit deuxième empilement de tissus composites (3) soit essentiellement égale à celle du noyau (2).
e) On dispose un troisième empilement de tissus composites (4) sur le deuxième empilement de tissus composites (3).
f) On comprime l'ensemble des empilements de tissus composites (1, 3, 4) obtenu à l'issue de l'étape e).
g) On effectue un cycle thermique, ledit cycle thermique étant conçu de manière à polymériser la résine thermodurcissable ou la résine thermoplastique pour obtenir une forme moulée et ledit matériau dispersible dans un liquide demeurant stable à la température maximale atteinte au cours dudit cycle thermique.
h) On démoule la forme moulée obtenue à l'issue de l'étape g).
i) On réalise la dissolution du noyau au moyen du liquide dans lequel le matériau est dispersible en vue de l'élimination de celui-ci.
j) On obtient un outillage de moulage en un matériau composite.

2. Procédé de fabrication d'un outillage de moulage selon la revendication 1, **caractérisé en ce qu'**il consiste à réaliser le noyau (2) en un matériau dispersible dans un liquide par moulage en une seule pièce.

3. Procédé de fabrication d'un outillage de moulage selon la revendication 1, **caractérisé en ce qu'**il consiste à réaliser le noyau (2) en un matériau dispersible à partir de plusieurs tronçons (9,10,17,18) qui sont raccordés les uns aux autres.

4. Procédé de fabrication d'un outillage de moulage selon l'une quelconque des revendications précédentes, **caractérisé en ce qu'**on réalise la dissolution du noyau (2) par projection du liquide ou par immersion dans le liquide dans lequel est dispersible le matériau.

5. Procédé de fabrication d'un outillage de moulage selon l'une quelconque des revendications précédentes, **caractérisé en ce que** le liquide dans lequel le matériau est dispersible est de l'eau.

6. Procédé de fabrication d'un outillage de moulage selon la revendication 5, **caractérisé en ce que** le matériau dispersible dans un liquide est obtenu à partir d'un mélange contenant :
- au moins une charge telle que du sable ou du quartz,
- au moins un liant soluble dans l'eau, de préférence choisi parmi les liants organiques,
- de l'eau.

7. Procédé de fabrication d'un outillage de moulage selon l'une quelconque des revendications précédentes, **caractérisé en ce qu'**il comprend en outre une étape d'usinage de la surface moulante dudit outillage de moulage.

8. Procédé de fabrication d'un outillage de moulage selon l'une quelconque des revendications précédentes, **caractérisé en ce que** la résine thermodurcissable est choisie dans le groupe constitué par les résines polyesters insaturés, les résines époxyde, les résines vinylester, les résines phénoliques, les résines polyimides, les résines polystyrylpyridine.

9. Procédé de fabrication d'un outillage de moulage selon l'une quelconque des revendications précédentes, **caractérisé en ce que** les tissus composites comprennent des fibres de renfort choisies dans le groupe constitué par les fibres de carbone, les fibres de verre et les fibres d'aramide.

## Patentansprüche

1. Verfahren für die Herstellung eines Formgusswerkzeugs, das für den Formguss eines Werkstücks aus Verbundmaterial bestimmt ist, das **dadurch gekennzeichnet ist, dass** es die folgenden Schritte umfasst:
a) Bereitstellen einer Unterlage.
b) Anordnen eines ersten Stapels von Verbundstoffen (1) auf der Unterlage, wobei die Verbundstoffe aus Fasern bestehen, die zuvor mit einem duroplastischen Harz oder einem thermoplastischen Harz imprägniert oder gepudert wurden.
c) Anordnen eines Kerns (2) aus einem in einer Flüssigkeit lösbaren Material auf dem ersten Stapel von Verbundstoffen (1), wobei der Kern (2) die Form eines Kühlfluidkreises hat, der an das Formgusswerkzeug angepasst ist.
d) Anordnen eines zweiten Stapels von Verbundstoffen (3) auf dem ersten Stapel von Verbundstoffen (1), wobei der Raum, der von dem Kern (2) freigelassen wird, derart gefüllt wird, dass die Dicke des zweiten Stapels von Verbundstoffen (3) im Wesentlichen der des Kerns (2) entspricht.
e) Anordnen eines dritten Stapels von Verbundstoffen (4) auf dem zweiten Stapel von Verbundstoffen (3).
f) Komprimieren der Stapelgruppe von Verbundstoffen (1, 3, 4), die nach Schritt e) entstanden ist.
g) Durchführen eines thermischen Zyklus, wobei der thermische Zyklus derart ausgebildet ist, dass das duroplastische Harz oder das thermoplastische Harz polymerisiert wird, um eine geformete Form zu erhalten und das in einer Flüssigkeit lösbare Material bei der maximalen Temperatur, die während des thermische Zyklus erreicht wird, stabil bleibt.
h) Lösen de geformten Form von Schritt g) aus der Form.
i) Auflösen des Kerns mit Hilfe von Flüssigkeit, in der das Material lösbar ist, um es zu entfernen.
j) Erhalt eines Formgusswerkzeugs aus einem Verbundmaterial.

2. Verfahren für die Herstellung eines Formgusswerkzeugs nach Anspruch 1, **dadurch gekennzeichnet ist, dass** es darin besteht, den Kern (2) aus einem in einer Flüssigkeit lösbaren Material in einem einzigen Stück herzustellen.

3. Verfahren für die Herstellung eines Formgusswerkzeugs nach Anspruch 1, **dadurch gekennzeichnet ist, dass** es darin besteht, den Kern (2) aus einem lösbaren Material aus mehreren Abschnitten (9, 10, 17, 18) herzustellen, die miteinander verbunden sind.

4. Verfahren für die Herstellung eines Formgusswerkzeugs nach einem der vorangehenden Ansprüche, **dadurch gekennzeichnet ist, dass** die Auflösung des Kerns (2) durch Spritzen der Flüssigkeit oder Eintauchen in die Flüssigkeit, in der das Material lösbar ist, erfolgt.

5. Verfahren für die Herstellung eines Formgusswerkzeugs nach einem der vorangehenden Ansprüche, **dadurch gekennzeichnet ist, dass** die Flüssigkeit, in der das Material lösbar ist, Wasser ist.

6. Verfahren für die Herstellung eines Formgusswerkzeugs nach Anspruch 5, **dadurch gekennzeichnet ist, dass** das in einer Flüssigkeit lösbare Material aus einem Gemisch hergestellt ist, das enthält:
- mindestens ein Mittel wie Sand oder Quarz,
- mindestens ein wasserlösliches Bindemittel, das vorzugsweise aus den organischen Bindemitteln ausgewählt ist,
- Wasser.

7. Verfahren für die Herstellung eines Formgusswerkzeugs nach einem der vorangehenden Ansprüche, **dadurch gekennzeichnet ist, dass** es ferner einen Schritt der Bearbeitung der formgebenden Oberfläche des Formgusswerkzeugs umfasst.

8. Verfahren für die Herstellung eines Formgusswerkzeugs nach einem der vorangehenden Ansprüche, **dadurch gekennzeichnet ist, dass** das duroplastische Harz aus der Gruppe ausgewählt ist, die von den ungesättigten Polyesterharzen, den Expoxydharzen, den Vinylesterharzen, den Phenolharzen, den Polyimidharzen, den Polystyrylpyridinharzen gebildet wird.

9. Verfahren für die Herstellung eines Formgusswerkzeugs nach einem der vorangehenden Ansprüche, **dadurch gekennzeichnet ist, dass** die Verbundstoffe Verstärkungsfasern umfassen, die aus der Gruppe ausgewählt sind, die von den Karbonfasern, den Glasfasern und den Aramidfasern gebildet wird.

## Claims

1. A method for manufacturing a molding device designed to mold a piece made from a composite material that is **characterized in that** it comprises the following steps:
a) Obtaining a substrate.
b) Arranging a first stack of composite tissues (1) on the substrate, said composite tissues consisting of fibers having been pre-impregnated or powdered with a thermosetting resin or a thermoplastic resin.
c) Placing, on the first stack of composite tissues (1), a core (2) made from a material that is dispersible in a liquid, said core (2) assuming the form of a coolant circuit suitable for the molding device.
d) Placing a second stack of composite tissues (3) on the first stack of composite tissues (1) while filling in the space left free by the core (2) such that the thickness of said second stack of composite tissues (3) is essentially equal to that of the core (2).
e) Placing a third stack of composite tissues (4) on the second stack of composite tissues (3).
f) Compressing all of the stacks of composite tissues (1, 3, 4) obtained at the end of step e).
g) Performing a thermal cycle, said thermal cycle being designed so as to polymerize the thermosetting resin or the thermoplastic resin to obtain a molded form and said material dispersible in a liquid remaining stable at the maximum temperature reached during the thermal cycle.
h) Stripping the molded form obtained at the end of step g).
i) Dissolving the core using the liquid in which the material is dispersible in order to eliminate said core.
j) Obtaining a molding device made from a composite material.

2. The method for manufacturing a molding device according to claim 1, **characterized in that** it consists of making the core (2) from a material dispersible in liquid with by molding in a single piece.

3. The method for manufacturing a molding device according to claim 1, **characterized in that** it consists of making the core (2) from a dispersible material from several segments (9, 10, 17, 18) that will be connected to each other.

4. The method for manufacturing a molding device according to any one of the preceding claims, **characterized in that** the core (2) is dissolved by spraying liquid or by immersion in the liquid in which the material is dispersible.

5. The method for manufacturing a molding device according to any one of the preceding claims, **characterized in that** the liquid in which the material is dispersible is water.

6. The method for manufacturing a molding device according to claim 5, **characterized in that** the material dispersible in the liquid is obtained from a mixture containing:
- at least one filler, such as sand or quartz,
- at least one water-soluble binder, preferably chosen from among organic binders,
- water.

7. The method for manufacturing a molding device according to any one of the preceding claims, **characterized in that** it further comprises a step for machining the molding surface of said molding device.

8. The method for manufacturing a molding device according to any one of the preceding claims, **characterized in that** the thermosetting resin is chosen from among the group consisting of unsaturated polyesters, epoxide resins, vinylester resins, phenolic resins, polyimide resins and polystyrylpyridine resins.

9. The method for manufacturing a molding device according to any one of the preceding claims, **characterized in that** the composite tissues comprise reinforcing fibers chosen from the group made up of carbon fibers, glass fibers and aramid fibers.
